# FASCICULE DE BREVET EUROPEEN

(11) **EP 0 404 646 B1**
(45) Date de publication et mention de la délivrance du brevet: **01.03.1995**
(21) Numéro de dépôt: 90401679.7
(22) Date de dépôt: 15.06.1990
(51) Int. Cl.: G01N 27/447

(54) **Capillaire d'électrophorèse à dispositif optique incorporé**
Elektroforetisches Kapillar mit eingebauter optischer Vorrichtung
Electrophoretic capillary with incorporated optical system

(30) Priorité: 21.06.1989 FR 8908257
(43) Date de publication de la demande: 27.12.1990
(73) Titulaire: ZETA TECHNOLOGY, 31520 Ramonville-Saint-Agne (FR)
(72) Inventeur: Hernandez, Luis aux bons soins de Mr.Mifsud, F-31200 Toulouse (FR)
(74) Mandataire: Cournarie, Michèle

(56) Documents cités:
- EP-A- 0 294 996
- FR-A- 2 558 262
- US-A- 2 748 074
- US-A- 3 994 593

## Description

L'invention concerne un capillaire d'électrophorèse à dispositif optique incorporé.

L'électrophorèse capillaire est une technique de séparation puissante qui permet de détecter la présence de substances dans des zones de détection de très faible volume. Cette technique d'électrophorèse trouve une application particulièrement intéressante dans le domaine médical et biologique, la migration électrophorétique se faisant soit dans un tampon soit sur gel.

Plusieurs modes de détection (spectrométrie UV, ampérométrie,...) peuvent être utilisés mais la détection par fluorescence s'est révélée être particulièrement sensible. La fluorescence est la propriété que possèdent certaines substances d'émettre, lorsqu'elles sont excitées par une lumière d'une certaine longueur d'onde, un rayonnement de longueur d'onde supérieure à celle des rayons incidents.

La sensibilité de la détection par fluorescence vient du fait que l'émission de fond (hors fluorescence) est pratiquement nulle de sorte que l'on observe de grands changements de l'émission. Ceci contraste avec le phénomène classique d'absorption où la différence entre le rayonnement incident et celui émis est très faible. On a en outre une sélectivité élevée du fait de la sélection de deux longueurs d'ondes (énergie d'excitation et énergie d'émission): ce choix précis permet une très grande sélectivité.

Dans les détecteurs classiques de fluorescence, la lumière émise par fluorescence est généralement recueillie soit dans le plan des rayons incidents, soit perpendiculairement au plan des rayons incidents.

En raison de la quantité minime des produits en présence, la lumière émise est faible et il est en outre nécessaire de prévoir des dispositifs optiques soit pour séparer la lumière incidente de la lumière émise soit pour réfléchir la lumière émise dans une direction particulière.

L'éxistence de tels dispositifs complémentaires oblige à faire l'obervation de la lumière à une certaine distance du capillaire d'où une perte de sensibilité. Par exemple, FR-A-2 558 262 décrit de tels dispositifs, pour filtrer et sélectionner des longueurs d'onde afin de distinguer entre quatre traceurs colorés. Les filtres sont à distance du capillaire d'électrophorèse.
EP-A-294 996 décrit un système comportant deux détecteurs et deux filtres sélecteurs de longueur d'onde, avec possibilité d'une surface réfléchissante sur une plaque de support de gel d'électrophorèse.
US-A-2 748 074 compense un indice de réfraction défavorable d'un tube par un choix particulier des diamètres interne et externe et de l'indice de réfraction du milieu d'électrophorèse.

Pour pallier cet inconvénient, l'invention fournit une solution qui consiste à former à la surface extérieure du capillaire au moins un dispositif optique qui est un filtre de coupure chromatique ou un réflecteur.

La fluorescence peut être observée dans le plan de la lumière incidente au-delà du capillaire et dans ce cas, le dispositif optique est un filtre de coupure chromatique ne laissant passer que la lumière de longueur d'onde supérieure à celle de la lumière incidente.

Elle peut également être observée dans le plan de la lumière incidente mais du même côté du capillaire ou dans un plan coupant le plan de la lumière incidente, en pratique le plus souvent à 45°. Dans le premier cas, le dispositif optique est un réflecteur. Le filtre de coupure chromatique est alors situé sur le trajet des rayons réfléchis, éventuellement même incorporé au capillaire lui-même. Dans le deuxième cas, le dispositif peut également être un filtre.

Différents types de matières réfléchissantes peuvent être utilisés pour réaliser ce réflecteur, par exemple une feuille de métal lorsque le réflecteur est déposé à la surface du capillaire (généralement en silice fondue) ou un métal ou un sel d'argent déposé par vaporisation, dépôt chimique, dépôt électrochimique, etc... soit à l'extérieur soit à l'intérieur du capillaire.

Le réflecteur peut recouvrir une plus au moins grande portion de capillaire, allant par exemple d'une portion semi-cylindrique à un recouvrement presque complet ne laissant passer la lumière réfléchie que dans la direction d'observation; la partie non réfléchisante pouvant comporter un filtre de coupure chromatique.

Lorsqu'on utilise une technique de vaporisation pour revêtir le capillaire soit extérieurement soit intérieurement, un film protecteur est appliqué sur la surface de capillaire ne devant pas être revêtue et est enlevé après revêtement de la partie à traiter.

Du fait de la présence du réflecteur, on peut orienter la lumière émise et/ou augmenter la quantité de lumière recueillie, ce qui abaisse en conséquence le seuil de détection.

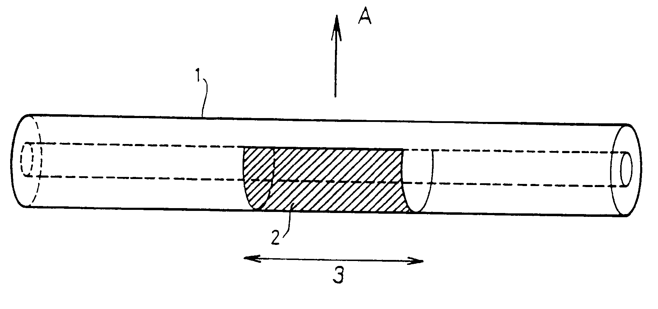

La figure annexée est une représentation schématique d'un capillaire dont une portion de la zone de détection comporte un réflecteur (ou un filtre) selon l'invention.

Le capillaire 1 est muni dans la zone de détection 3 sur une portion de sa surface extérieure d'un réflecteur 2 qui réfléchit la lumière émise à l'intérieur du capillaire dans la direction d'observation (flèche A). La surface recouverte par le réflecteur peut être plus ou moins importante, et il peut n'y avoir qu'une "fenêtre" très étroite pour laisser passer la lumière dans la direction A.

Le réflecteur peut être constitué par une feuille métallique, par exemple en aluminium, ou de polymère réfléchissant découpée et fixée au capillaire. Il peut avantageusement être formé par dépôt de métal (argent, rhodium,...) par vaporisation, électrodéposition, etc... Ces techniques de dépôt sont utilisables également pour la formation d'un réflecteur à l'intérieur du capillaire.

Pour la formation d'un filtre de coupure chromatique, on peut utiliser par exemple les techniques de pyrolyse ou de miroitage avec des sels métalliques de nature différente selon la coupure désirée.

## Revendications

1. Capillaire d'électrophorèse avec détection par fluorescence, caractérisé en ce qu'il comporte au moins un dispositif optique formé à la surface extérieure du capillaire (1) au niveau de la zone de détection (3) de la fluorescence, ledit dispositif optique étant un filtre de coupure chromatique ou un réflecteur (2).

2. Capillaire selon la revendication 1 caractérisé en ce que ledit dispositif optique n'occupe qu'une portion de la surface de la zone de détection (3).

3. Capillaire selon l'une ou l'autre des revendications 1 ou 2, caractérisé en ce que le dispositif optique est un réflecteur (3) formé par un métal déposé par vaporisation ou électrodéposition.

4. Capillaire selon l'une ou l'autre des revendications 1 ou 2, caractérisé en ce que le dispositif optique est un réflecteur (3) formé par un film polymère réfléchissant.

## Patentansprüche

1. Elektrophoresekapillare mit Fluoreszenzerfassung, dadurch gekennzeichnet, daß sie mindestens eine an der äußeren Oberfläche der Kapillare (1) in Höhe der Fluoreszenzerfassungszone (3) ausgebildete Optikvorrichtung aufweist, wobei die besagte Optikvorrichtung ein Farbtrennfilter oder ein Reflektor (2) ist.

2. Kapillare nach Anspruch 1, dadurch gekennzeichnet, daß die besagte Optikvorrichtung nur einen Teil der Oberfläche der Erfassungszone (3) einnimmt.

3. Kapillare nach einem der Ansprüche 1 oder 2, dadurch gekennzeichnet, daß die Optikvorrichtung ein von einem durch Verdampfen oder galvanisch abgeschiedenen Metall gebildeter Reflektor (3) ist.

4. Kapillare nach einem der Ansprüche 1 oder 2, dadurch gekennnzeichnet, daß die Optikvorrichtung ein von einem reflektierenden Polymerfilm gebildeter Reflektor (3) ist.

## Claims

1. An electrophoresis capillary with detection by fluorescence, characterized in that it includes at least one optical device formed on the outside surface of the capillary (1) level with the fluorescence detection zone (3), said optical device being a color cut-off filter or a reflector (2).

2. A capillary according to claim 1, characterized in that said optical device occupies only a portion of the area of the detection zone (3).

3. A capillary according to claim 1 or 2, characterized in that the optical device is a reflector (3) formed by a metal deposited by vaporization or by electrodeposition.

4. A capillary according to claim 1 or 2, characterized in that the optical device is a reflector (3) formed by a reflecting polymer film.
